# EUROPEAN PATENT SPECIFICATION

(11) **EP 1 438 822 B1**
(45) Date of publication and mention of the grant of the patent: **05.07.2006**
(21) Application number: 02770109.3
(22) Date of filing: 25.10.2002
(51) Int. Cl.: H04L 29/06, H04Q 7/22

(54) **TELECOMMUNICATIONS SERVICES APPARATUS**
VORRICHTUNG FÜR TELEKOMMUNIKATIONSDIENSTE
APPAREIL DE SERVICES DE TELECOMMUNICATIONS

(30) Priority: 26.10.2001 GB 0125745; 22.03.2002 GB 0206830
(43) Date of publication of application: 21.07.2004
(73) Proprietor: INTELLPROP LIMITED, Guernsey, Channel Islands (GB)
(72) Inventor: WILSON, Jeffrey, Hampshire PO16 7OH (GB)
(74) Representative: Pilch, Adam John Michael
(86) International application number: PCT/GB2002/004853
(87) International publication number: WO 2003/036906

(56) References cited:
- EP-A- 1 083 768
- WO-A-00/74334
- WO-A-98/30051
- US-A1- 2002 112 014
- US-B1- 6 292 669

## Description

This invention relates to telecommunications services apparatus for use with a telephone system, in particular but not exclusively to a mobile telephone system capable of handling text messaging.

Text messaging is established as a popular and effective means of communication for users of mobile telephones. The Short Message Services (SMS) of the GSM mobile telephony system provide such a text messaging facility, and support for the composition, transmission and reception of Short Messages is present in the majority of mobile terminals. Text messaging requires alphanumeric entry using the standardised Man Machine Interface (MMI) of the mobile handset, and also requires that the message be addressed to the desired recipient. The destination address for the message may typically be specified either by entering a Mobile Station ISDN number (MSISDN) which is the mobile telephone number of the desired recipient, or by selecting an entry from the handset's address book which already has the desired MSISDN pre-programmed in. The address book normally provides the MSISDN by using alphanumeric look-up of a name.

The SMS mechanism was originally defined for mobile to mobile text messaging, but has been extended to permit communication between mobiles and fixed entities in the network known as SMS Hosts. SMS Hosts are typically used for receiving the results of SMS voting events, or transmitting messages such as football results in bulk to users who subscribe to a football service for example. SMS Hosts are responsible for an increasing proportion of SMS traffic.

One of the features of SMS is that an identifier corresponding to the sender's identity is always transmitted to the recipient. It may not be optionally withheld by the sender. This Calling Line Identity (CLI) is normally sent and may be displayed in the form of an MSISDN, though most handsets will translate this to an alphanumeric name if there is a corresponding MSISDN entry in the handset's address book. This provides ease of recognition of the sender, without the recipient having to remember telephone numbers. The mobile CLI feature is analagous to the CLI facility available on fixed networks. Another benefit of receiving CLI is that a reply to the message is more easily achieved, without having to explicitly specify the return address. The MMI for mobile handsets defines "Reply" as a standard feature.

As an alternative to transmission of the CLI identifier as an MSISDN, the GSM system also supports the transmission of a short alphanumeric value or name instead. Support for reception and correct display of an alphanumeric CLI is almost universally available on recent mobile telephones.

Unfortunately an alphanumeric CLI is not generally usable with the "Reply" function of a handset. Attempts to reply to an alphanumeric address will currently be rejected by the network because the short message service centre (SMSC) has no means to identify the home location register (HLR) which should be queried to look up the International Mobile Subscriber Identity (IMSI) of the desired recipient from the alphanumeric identifier. Even if the correct HLR could be identified by the SMSC. the HLR would normally only capable of looking up an IMSI from an MSISDN. The SMSC therefore rejects the message as undeliverable.

This is a problem for networks and service providers who would like to use alphanumeric identifiers both to promote their brands, and to ensure that recipients are aware of the message source. In this regard, alphanumeric names are much preferable to an MSISDN number, especially as the MSISDN CLI of an SMS Host service is unlikely to match an entry in the recipient's address book.

Currently for messages sent by SMS Hosts, operators and service providers have a choice. They can choose to use an MSISDN as a CLI thereby giving the recipient the option to reply, or they can elect to send an alphanumeric CLI accepting that the recipient cannot reply.

It is an aim of at least an embodiment of the present invention to solve this problem, and to allow the standard "Reply" function of a mobile handset to work successfully for messages which have an alphanumeric CLI, without any changes being required in the handset.

US-B-6 292 669 discloses a text message system in which an identifier (included in a text message using an MSISDN) is associated with a desired service. A received identifier is checked against a database so as to determine the desired service and also associated routing information. The message is then sent to the routing address according to the result of the database check.

EP-A-1 083 768 describes a data transmission technique in which a subscriber internet identity is determined by use of a first portion of the IP address for a look-up of a first portion of the subscriber identity, and by an assignment of a second portion of the IP address to a second portion of the subscriber identity.

One aspect of the invention provides telecommunications services apparatus for use with a telephone system in which address signals associated with telephone communication may be in one of first and second signal formats, wherein the first signal format is recognisable by communication enabling equipment in the telephone system, the apparatus comprising receiving and directing means for receiving the address signals and being operable to distinguish between address signals in the first and second formats, to direct the address signals in the first format to the communication enabling equipment, and to re-route the address signals in the second format on the basis of stored information accessible to the receiving and directing means, wherein the telephone system is a mobile telephone system for sending and receiving message signals, wherein the first signal format comprises a sequence of dialled numeric characters, and wherein the second signal format comprises a sequence of alphanumeric characters.

Another aspect of the invention provides a method of communicating with a telephone system in which address signals associated with telephone communication may be in one of first and second signal formats, wherein the first signal format is recognisable by communication enabling equipment in the telephone system, the method comprising receiving the address signals and distinguishing between address signals in the first and second formats, to direct the address signals in the first format to the communication enabling equipment, and to re-route the address signals in the second format on the basis of stored information, wherein the telephone system is a mobile telephone system for sending and receiving message signals, wherein the first signal format comprises a sequence of dialled numeric characters, and wherein the second signal format comprises a sequence of alphanumeric characters.

The received signals in the second format (sequence of alphanumeric characters) may be selectively converted into address signals in the first format (sequence of dialled numeric characters) on the basis of stored information, prior to directing the converted signals to the communication enabling equipment.

In future, as more handsets gain the ability to enter an alphanumeric address, the present invention will support the use of alphanumeric destination addresses on mobile initiated messages as well as on replies. In addition to being able to send mobile initiated messages with alphanumeric destination addresses to SMS Hosts, mobile networks may offer users the option to adopt a personal alphanumeric identity as an alias for their MSISDN. These identities might need to be unique across the whole network, or unique within a closed user-group or community. Messages could then be sent to other users by using their alphanumeric address instead of a destination telephone number.

The Short Message Services of GSM define signalling messages within the Mobile Application Protocol (MAP) for transferring the Short Message in Mobile Originated (MO) mode between the mobile handset and the Short Message Service Centre and in Mobile Terminated (MT) mode between the Short Message Service Centre and the mobile handset.

There are four address identifiers which are relevant to Short Message transmission, and these are
- The MSISDN of the sender (his CLI)
- The MSISDN of the recipient (the destination address)
- The IMSI of the recipient (used by the network to deliver the message to the correct phone)
- The Short Message Service Centre address.

When a Short Message is sent from one mobile to another, it normally passes through an SMSC of the home network of the sending subscriber, even when the sending subscriber is roaming on another network. The message arrives at the SMSC in Mobile Originated mode, is converted to Mobile Terminated mode by the SMSC, and is then delivered to the destination. The MAP messages which support SMS transmission have three fields which are used to carry the four address identifiers listed above. The MAP address fields are called DA (Destination Address). OA (Originating Address) and UI (User Information.) They are used as shown in Table 1.

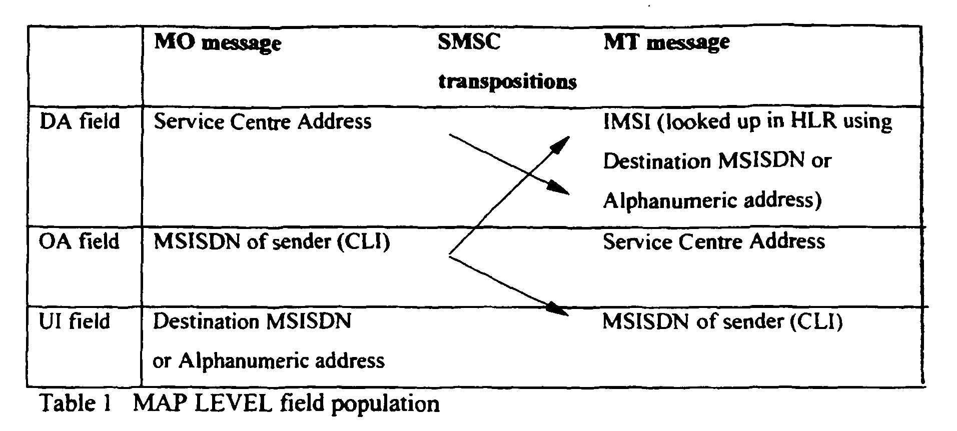

Table 1 shows the transpositions of the address identifiers which occur as the SMSC converts the incoming MO message type into an outgoing MT message type. The IMSI is obtained by looking up the destination MSISDN number in the destination network's home location register (HLR). This is the root cause of the failure of replies to Short Messages with an alphanumeric CLI. If the MO reply from the mobile uses an alphanumeric identifier as its destination address, then when the SMSC attempts to determine which HLR to use to look up the IMSI of the recipient, it finds that the alphanumeric identifier is not formatted according to the standard MSISDN international numbering plan, and it is therefore unable to deduce the identity of the destination network. It is consequently unable to query an HLR to obtain an IMSI for delivery.

The present invention addresses the above problem by intercepting messages which have alphanumeric destination addresses before they reach the SMSC. If the solution is installed in the network of Operator A then it will be operative for all of Operator A's subscribers even when they are roaming on other networks. By appropriate signalling means (well known in telecommunication networks). Short Messages destined for Operator A's SMSC are routed via one or more equipments which implement the present invention. Short Messages which do not have an alphanumeric destination address are forwarded on transparently by these equipments to the SMSC for normal handling, while messages which do have an alphanumeric destination address are handled differently.

In one preferred implementation these messages are modified to convert the alphanumeric destination address carried within the User Information field of the MO MAP message into an MSISDN by means of a look-up table or database. The Short Message may then be forwarded to the SMSC for normal handling. In another preferred implementation. Short Messages with alphanumeric destination addresses which correspond to the addresses of SMS Hosts of Operator A's network, are delivered over a communication link to the SMS Host without passing through the SMSC.

Short Messages which have an alphanumeric destination address which is not matched in the look-up table or database are treated specially, either by discarding the message or by forwarding the message to a default destination, and in either case optionally informing the sender of the delivery failure.

By means of interpretation of the alphanumeric destination address using a look-up table or database, the problem of replying to messages with alphanumeric destination addresses is solved. This also allows messages that are initiated from mobile handsets with an alphanumeric destination address, rather than simply replied, to be delivered successfully by the network if and when support for alphanumeric address entry is provided in mobile handsets.

Additionally, equipment may be provided in the network which would optionally modify the parameters of an initiated call or communication, so that for white-listed customers their MSISDN CLI, as generated by current handsets, would be replaced by a meaningful alphanumeric CLI for display at the recipient's terminal. This would then allow mobile customers to have their selected name presented at receiving terminals without requiring the sending terminal to have the capability to support alphanumeric CLI generation.

Similar techniques to those described above for Short Messages can also be applied to voice calls, and other types of call. Once support is provided in handsets for initiation of calls with alphanumeric CLI and/or alphanumeric destination address entry, then the benefits of sending a call or communication to a meaningful name rather than a number, or receiving a meaningful CLI for any type of call or communication, can be realised. One of the reasons that the Internet is so successful is that the addressing scheme uses indirection and alphanumeric addresses. The Internet URL of a desired company site can usually be inferred from the company name.

In co-pending International Patent Application Publication No. WO 02/085052 architecture is disclosed for filtering Short Messages, that selectively routes Short Messages either directly to their destination or via an SMSC according to message characteristics. The equipment location in the network and the Short Message content examination required to do the filtering have similarities to the preferred embodiment of the present invention.

The functionality and operation of home location registers (HLRs) in modern mobile networks is well described by the international standards. Although HLRs may implement proprietary features, the signalling messages which are required to support voice-call and short message reception and transmission are fully defined. It is also known that HLR functionality can be divided amongst multiple physical equipments. These equipments are normally geographically diverse and physically similar.

The use of SMS Hosts is also well known. SMS Hosts are usually connected to a mobile network via the Short Message Service Centre (SMSC), using one of a number of standard protocols. Many networks support the reception and transmission of large quantities of short messages by attached SMS Hosts.

It is also known that methods exist for accessing these SMS Hosts from other networks, albeit with throughput restrictions. These methods overcome earlier addressing limitations by assigning the SMS Hosts a range of mobile telephone numbers so that messages can be addressed to them as though they were mobile handsets. This permits access to the SMS Hosts from any mobile network. This technique has become known as virtual mobile.

Signalling messages can be routed within a network using Signalling Transfer Points (STPs). These have the capabilities to direct messages to preferred or secondary destinations according to an addressing scheme which uses Global Titles. The MSISDN of the destination mobile telephone or SMS Host has been used as the Global Title for routing Short Messages. By manipulating the look-up tables within STPs it is possible to control the routing of signalling messages through a network. STPs can also compensate for non availability of a signalling destination by using secondary or tertiary routing addresses. Global titles can also be assigned to groups of equipments, with STPs used to distribute messages to that title amongst the equipments.

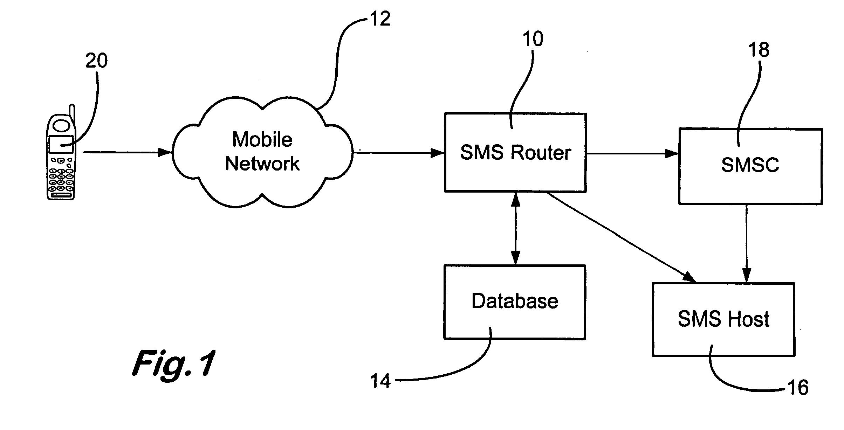

The invention will now be described by way of example with reference to the accompanying single figure drawing. Figure 1, which shows a block diagram of an architecture for SMS alpha translation of Mobile Originated (MO) messages.

The preferred embodiment of the present invention uses a Telsis (RTM) SMS Router, manufactured by Telsis Limited. This equipment connects to the mobile telephone network using well known and standardised signalling protocols including SS7 and TCP/IP. Using well known signalling routing techniques, the mobile network can arrange for Short Messages directed to the network's SMSCs to be routed via the SMS Router. Short Messages may then be forwarded to an SMSC from the SMS Router. The SMS Routers are said to be in-line with the SMSC's message reception.

In an alternative embodiment, the present invention uses a Telsis SMS Router 10 as shown in Figure 1. This equipment connects to the mobile telephone network using well-known and standardised signalling protocols including SS7 and TCP/IP. The SMS Router 10 is connected to have access to a database 14. and also to an SMS Host 16. either directly or via the Short Message Service Centre (SMSC) 18 of the network.

By arranging for the SMSC number in a user's handset 20 to be changed, the mobile network can arrange for Mobile Originated Short Messages from this handset to be routed to the SMS Router 10. The SMS Router 10 may then modify the SMSC address in the message and forward the message, causing the message to be onward routed to the SMSC 18. This embodiment is advantageous for rapid deployment of a solution without extensive modifications to network routing. It is simply necessary for the Service Centre number in the handset 20 to be changed (either manually or remotely) to an address corresponding to the SMS Router 10. for the router to have access to that user's mobile originated messages.

In a further embodiment, the invention is implemented in conjunction with a virtual mobile technique such that messages arriving from other networks may be arranged to pass through an SMS Router that implements the invention. This arrangement is particularly convenient when the virtual mobile equipment itself comprises one or more SMS Routers. The functionality of virtual mobile may then be extended according to the present invention, permitting messages with alpha addresses to be received from any network, and handled appropriately.

In any embodiment, the address of the SMS Router 10 may be a global title which represents a group of SMS Routers, and the network may use well-known mechanisms for address resolution to direct messages to an appropriate specific SMS Router. In this way, SMS Routing capacity can be increased by adding more SMS Routers.

In any embodiment, the techniques for alphanumeric addressing as described may be used not only for routing messages, but also for invoking network services. For example, a Short Message sent to the alphanumeric address "HELP" could be directed to an SMS Router by way of the means described, and used to trigger the provision of assistance to the user, for example by SMS.

The SMS Router 10 has the capability to rapidly examine and manipulate the contents of MAP message fields and User Information within the protocol data of the Short Message. By use of an internal look-up table or an attached database 14. depending on the number of entries to be stored, the SMS Router 10 is capable of replacing alphanumeric CLI values in the UI field with corresponding MSISDNs obtained from the look-up process. The look-up process preferably uses a hashing technique to minimise the storage required in the data table. Messages which arrive with non-alphanumeric addresses may be forwarded to the SMSC 18 transparently by the SMS Router 10.

Depending on the address determined as a result of the look-up, the message may be forwarded to an SMSC with a translated destination address, or may be passed to an addressed SMS Host over a communication link without passing via an SMSC. This has the advantage of reducing loading on the SMSC. The SMS Router is also capable of producing transaction detail records which can be used for logging and/or billing purposes.

Short Messages which do not have an alphanumeric destination address, as indicated by the address type parameter carried with the Short Message, are passed through to the SMSC transparently, while alphanumeric addresses may be modified. If desired the modification may be conditional upon a white-list so that only certain subscribers have the benefit of this service.

When Short Messages having an alphanumeric destination address are not recognised, they may either be rejected or sent to a default destination; in either case, the caller may be informed of delivery failure, for example by voice message from the equipment.

In the description, the term SMS Host is used to mean an equipment, a service or a service-provider which is capable of terminating an SMS Message. The present invention therefore allows users to send a Short Message to a destination, such as a bank or airline for example, without needing to know the telephone number, but instead by using the alphanumeric name or an abbreviation for the desired destination, which may represent for example a company, a service, a service-provider or even an individual. The desired destination may be reached either via an SMSC or directly, either over SS7 or via another protocol, and either within the same network or in a different network.

### GLOSSARY

| | |
|---|---|
| CLI | Calling Line Identity |
| GPRS | General Packet Radio Service. Enhancement to GSM mobile telephone system for transfer of packet data |
| IMSI | International Mobile Subscriber Identifier |
| MAP | Mobile Application Protocol |
| MMI | Man Machine Interface of the GSM handset |
| MO | Mobile Originated |
| MSISDN | Mobile Station ISDN number |
| MT | Mobile Terminated |
| PLMN | Public Land Mobile Network |
| SMS | Short Message Service of the GSM mobile telephone system |
| SMS Host | Equipment for sourcing and sinking Short Messages for specific applications |
| SMS Router | Equipment which embodies the invention and filters and responds to certain signalling messages. |
| SMSC | Short Message Service Centre |
| SS7 | CCITT Signalling System no 7 |
| STP | Signalling Transfer Point |
| TCP/IP | Transmission Control Protocol/Internet Protocol. A well known internet data protocol. |
| UI | User Information |
| URL | Universal Resource Locator |

## Claims

1. Telecommunications services apparatus for use with a telephone system in which address signals associated with telephone communication may be in one of first and second signal formats, wherein the first signal format is recognisable by communication enabling equipment (18) in the telephone system, the apparatus comprising receiving and directing means (10) for receiving the address signals and being operable to distinguish between address signals in the first and second formats, to direct the address signals in the first format to the communication enabling equipment (18), and to re-route the address signals in the second format on the basis of stored information accessible to the receiving and directing means (10), wherein the telephone system is a mobile telephone system for sending and receiving message signals, wherein the first signal format comprises a sequence of dialled numeric characters, and wherein the second signal format comprises a sequence of alphanumeric characters.

2. Apparatus according to claim 1, wherein the stored information is accessible from a means (14) operable to identify a re-routing destination from the address signals in the second format.

3. Apparatus according to claim 2, wherein the means operable to identify a re-routing destination comprises a look-up table (14).

4. Apparatus according to claim 1, claim 2 or claim 3, wherein the receiving and directing means (10) is further operable to convert the address signals in the second format into address signals in the first format on the basis of stored information accessible to the receiving and directing means (10) prior to directing the converted signals to the communication enabling equipment (18).

5. Apparatus according to claim 4, wherein the stored information is accessible from a means (14) for providing correspondence between specific address signals in the first format and respective address signals in the second format.

6. Apparatus according to claim 5, wherein the means for providing correspondence comprises a look-up table (14).

7. Apparatus according to any one of claims 1 to 6, wherein the first signal format comprises mobile station ISDN (MSISDN) signals.

8. Apparatus according to any one of claims 1 to 7, wherein the telephone system is a mobile telephone system for sending and receiving text message signals.

9. Apparatus according to any one of claims 1 to 8, wherein, when received address signals in the second format are not recognised, the attempted associated telephone communication is rejected.

10. Apparatus according to any one of claims 1 to 8, wherein, when received address signals in the second format are not recognised, the attempted associated telephone communication is directed to a default destination.

11. Apparatus according to claim 9 or claim 10, wherein, when the received address signals in the second format are not recognised, the subscriber initiating the attempted associated telephone communication is informed of delivery failure.

12. Apparatus according to any one of the preceding claims, wherein messages may be received from any network using a virtual mobile technique.

13. Apparatus according to any one of the preceding claims, wherein processing of address signals in the second format is conditional upon the subscriber initiating the attempted telephone communication being on a white list of subscribers.

14. A method of communicating with a telephone system in which address signals associated with telephone communication may be in one of first and second signal formats, wherein the first signal format is recognisable by communication enabling equipment in the telephone system, the method comprising receiving the address signals and distinguishing between address signals in the first and second formats, to direct the address signals in the first format to the communication enabling equipment, and to re-route the address signals in the second format on the basis of stored information, wherein the telephone system is a mobile telephone system for sending and receiving message signals, wherein the first signal format comprises a sequence of dialled numeric characters, and wherein the second signal format comprises a sequence of alphanumeric characters.

15. A method according to claim 14, wherein the received address signals in the second format may be further converted into address signals in the first format on the basis of stored information, prior to directing the converted signals to the communication enabling equipment.

## Patentansprüche

1. Telekommunikationsdienstevorrichtung für die Verwendung mit einem Telefonsystem, in dem Adreßsignale, die mit der Telefonkommunikation verknüpft sind, in einem ersten oder einem zweiten Signalformat sein können, wobei das erste Signalformat von dem die Kommunikation ermöglichenden Equipment (18) in dem Telefonsystem erkennbar ist, wobei die Vorrichtung eine Empfangs- und Leiteinrichtung (10) für das Empfangen der Adreßsignale aufweist und betreibbar ist, um zwischen den Adreßsignalen in dem ersten und zweiten Format zu unterscheiden, um die Adreßsignale in dem ersten Format zu dem die Kommunikation ermöglichenden Equipment (18) zu leiten, und um die Adreßsignale in dem zweiten Format auf Basis der gespeicherten Information, auf die die Empfangs- und Leiteinrichtung (10) zugreifen kann, umzuleiten (rerouting), wobei das Telefonsystem ein Mobiltelefonsystem für das Senden und Empfangen von Nachrichtensignalen ist, wobei das erste Signalformat eine Abfolge von gewählten numerischen Zeichen ist, und wobei das zweite Signalformat eine Abfolge von alphanumerischen Zeichen ist.

2. Vorrichtung nach Anspruch 1, bei der die gespeicherte Information von einer Einrichtung (14) zugegriffen werden kann, die betreibbar ist, um ein Umleitziel von den Adreßsignalen in dem zweiten Format zu identifizieren.

3. Vorrichtung nach Anspruch 2, bei der die Einrichtung, die betreibbar ist, um ein Umleitziel zu identifizieren, eine Nachschlagtabelle (14) aufweist.

4. Vorrichtung nach Anspruch 1, Anspruch 2 oder Anspruch 3, bei der die Empfangs- und Leiteinrichtung (10) weiterhin betreibbar ist, um die Adreßsignale in dem zweiten Format in Adreßsignale in dem ersten Format umzuwandeln, und zwar auf Basis der gespeicherten Information, auf die die Empfangs- und Leiteinrichtung (10) zugreifen kann, bevor sie die umgewandelten Signale zu dem die Kommunikation ermöglichenden Equipment (18) leitet.

5. Vorrichtung nach Anspruch 4, bei der auf die gespeicherte Information von einer Einrichtung (14) für das Bereitstellen einer Korrespondenz zwischen spezifischen Adreßsignalen in dem ersten Format und entsprechenden Adreßsignalen in dem zweiten Format zugegriffen werden kann.

6. Vorrichtung nach Anspruch 5, bei der die Einrichtung für das Bereitstellen einer Korrespondenz eine Nachschlagtabelle (14) aufweist.

7. Vorrichtung nach einem der Ansprüche 1 bis 6, bei der das erste Signalformat mobile Subscriber ISDN-Signale (MSISDN) aufweist.

8. Vorrichtung nach einem der Ansprüche 1 bis 7, bei der das Telefonsystem ein Mobiltelefonsystem für das Senden und Empfangen von Textnachrichtsignalen ist.

9. Vorrichtung nach einem der Ansprüche 1 bis 8, bei der, wenn empfangene Adreßsignale in dem zweiten Format nicht erkannt werden, die versuchte verknüpfte Telefonkommunikation zurückgewiesen wird.

10. Vorrichtung nach einem der Ansprüche 1 bis 8, bei der, wenn die empfangenen Adreßsignale im zweiten Format nicht erkannt werden, die verknüpfte versuchte Telefonkommunikation zu einem voreingestellten Ziel geleitet wird.

11. Vorrichtung nach Anspruch 9 oder Anspruch 10, bei der, wenn die empfangenen Adreßsignale im zweiten Format nicht erkannt werden, der Teilnehmer, der die versuchte verknüpfte Telefonkommunikation initiiert hat, über das Fehlschlagen der Zustellung informiert wird.

12. Vorrichtung nach einem der vorherigen Ansprüche, bei der Nachrichten von irgendeinem Netzwerk unter Verwendung einer virtuellen mobilen Technik empfangen werden können.

13. Vorrichtung nach einem der vorherigen Ansprüche, bei der das Verarbeiten der Adreßsignale in dem zweiten Format bedingt wird durch einen Teilnehmer, der die versuchte Telefonkommunikation initiiert, der auf einer weißen Liste von Teilnehmern steht.

14. Verfahren der Kommunikation mit einem Telefonsystem, in dem Adreßsignale, die mit der Telefonkommunikation verknüpft sind, in einem ersten oder einem zweiten Signalformat sein können, wobei das erste Signalformat durch das die Kommunikation ermöglichende Equipment in dem Telefonsystem erkannt werden kann, wobei das Verfahren aufweist: das Empfangen der Adreßsignale und das Unterscheiden zwischen den Adreßsignalen im ersten und zweiten Format, um die Adreßsignale in dem ersten Format zu dem die Kommunikation ermöglichenden Equipment zu leiten, und die Adreßsignale in dem zweiten Format auf Basis der gespeicherten Information umzuleiten, wobei das Telefonsystem ein mobiles Telefonsystem für das Senden und Empfangen von Nachrichtensignalen ist, wobei das erste Signalformat eine Abfolge von gewählten numerischen Zeichen aufweist, und wobei das zweite Signalformat eine Abfolge von alphanumerischen Zeichen aufweist.

15. Verfahren nach Anspruch 14, bei dem die empfangenen Adreßsignale im zweiten Format weiter umgewandelt werden in Adreßsignale in dem ersten Format auf Basis der gespeicherten Information, und zwar vor dem Leiten der umgewandelten Signale zu dem die Kommunikation ermöglichenden Equipment.

## Revendications

1. Appareil de services de télécommunications, destiné à être utilisé avec un système téléphonique dans lequel des signaux d'adresse associés à une communication téléphonique peuvent être dans un premier ou un second format de signaux, le premier format de signaux étant reconnaissable par un équipement de validation de communication (18) dans le système téléphonique, l'appareil comprenant un moyen de réception et de redirection (10) destiné à recevoir les signaux d'adresse et pouvant distinguer entre des signaux d'adresse dans les premier et second formats, rediriger les signaux d'adresse dans le premier format vers l'équipement de validation de communication (18) et rerouter les signaux d'adresse dans le second format sur la base d'informations mémorisées qui sont accessibles au moyen de réception et de redirection (10), le système téléphonique étant un système téléphonique mobile destiné à envoyer et recevoir des signaux de messages, le premier format de signaux comprenant une séquence de caractères numériques composés et le second format de signaux comprenant une séquence de caractères alphanumériques.

2. Appareil selon la revendication 1, dans lequel les informations mémorisées sont accessibles à partir d'un moyen (14) pouvant identifier une destination de reroutage à partie des signaux d'adresse dans le second format.

3. Appareil selon la revendication 2, dans lequel le moyen pouvant identifier une destination de reroutage comprend une table de consultation (14).

4. Appareil selon la revendication 1, la revendication 2 ou la revendication 3, dans lequel le moyen de réception et de redirection (10) peut en outre convertir les signaux d'adresse du second format en signaux d'adresse du premier format, sur la base d'informations mémorisées qui sont accessibles au moyen de réception et de redirection (10), avant de rediriger les signaux convertis vers l'équipement de validation de communication (18).

5. Appareil selon la revendication 4, dans lequel les informations mémorisées sont accessibles à partir d'un moyen (14) destiné à fournir une correspondance entre des signaux d'adresse spécifiques dans le premier format et des signaux d'adresse spécifiques dans le second format.

6. Appareil selon la revendication 5, dans lequel le moyen destiné à fournir la correspondance comprend une table de consultation (14).

7. Appareil selon l'une quelconque des revendications 1 à 6, dans lequel le premier format de signaux comprend des signaux MSISDN (pour *« Mobile Station International Subscriber Directory Number »* - Numéro d'annuaire international des abonnés - stations mobiles).

8. Appareil selon l'une quelconque des revendications 1 à 7, dans lequel le système téléphonique est un système téléphonique mobile destiné à envoyer et recevoir des signaux de messages textuels.

9. Appareil selon l'une quelconque des revendications 1 à 8, dans lequel, lorsque des signaux d'adresse reçus dans le second format ne sont pas reconnus, la tentative de communication téléphonique associée est rejetée.

10. Appareil selon l'une quelconque des revendications 1 à 8, dans lequel, lorsque des signaux d'adresse reçus dans le second format ne sont pas reconnus, la tentative de communication téléphonique associée est redirigée vers une destination par défaut.

11. Appareil selon la revendication 9 ou la revendication 10, dans lequel, lorsque des signaux d'adresse reçus dans le second format ne sont pas reconnus, l'abonné à l'origine de la tentative de communication téléphonique associée est informé de l'échec d'acheminement.

12. Appareil selon l'une quelconque des revendications précédentes, dans lequel des messages peuvent être reçus d'un réseau quelconque en utilisant une technique de mobile virtuel.

13. Appareil selon l'une quelconque des revendications précédentes, dans lequel le traitement des signaux d'adresse dans le second format est soumis à la condition que l'abonné à l'origine de la tentative de communication téléphonique associée se trouve sur une liste blanche d'abonnés.

14. Procédé de communication avec un système téléphonique dans lequel des signaux d'adresse associés à une communication téléphonique peuvent être dans un premier ou un second format de signaux, le premier format de signaux étant reconnaissable par un équipement de validation de communication dans le système téléphonique, le procédé comprenant les étapes consistant à recevoir les signaux d'adresse et à distinguer entre des signaux d'adresse dans les premier et second formats, à rediriger les signaux d'adresse dans le premier format vers l'équipement de validation de communication et à rerouter les signaux d'adresse dans le second format sur la base d'informations mémorisées, le système téléphonique étant un système téléphonique mobile destiné à envoyer et recevoir des signaux de messages, le premier format de signaux comprenant une séquence de caractères numériques composés et le second format de signaux comprenant une séquence de caractères alphanumériques.

15. Procédé selon la revendication 14, dans lequel les signaux d'adresse reçus dans le second format peuvent en outre être convertis en signaux d'adresse du premier format, sur la base d'informations mémorisées, avant de rediriger les signaux convertis vers l'équipement de validation de communication.
